Europäisches Patentamt

European Patent Office

Office européen des brevets

(11) Numéro de publication: **0 320 560**
**A1**

## (12) DEMANDE DE BREVET EUROPEEN

(21) Numéro de dépôt: 87870184.6

(51) Int. Cl.4: **B60L 9/22** , **H02P 7/63**

(22) Date de dépôt: **17.12.87**

(43) Date de publication de la demande:
**21.06.89 Bulletin 89/25**

(84) Etats contractants désignés:
**AT BE CH DE ES FR GB GR IT LI LU NL SE**

(71) Demandeur: **ACEC, Société Anonyme**
**Avenue Lloyd George 7**
**B-1050 Bruxelles(BE)**

(72) Inventeur: **Van Daele, Gilbert**
**22, Rue des Combattants**
**B-5670 Sambreville(BE)**

(54) **Dispositif moteur pour l'alimentation de véhicules et engins industriels.**

(57) Montage comprenant plusieurs convertisseurs de tension (3A, 3B) connectés en série aux bornes de la source de tension continue (1), la sortie de chaque convertisseur de tension étant connectée à un ensemble d'enroulements inducteurs distincts (21A, 21B) montés sur le stator d'un moteur à induction (2), les différents ensembles d'enroulements inducteurs étant répartis régulièrement sur le pourtour du stator, lesdits ensembles d'enroulements inducteurs étant isolés électriquement l'un de l'autre et étant couplés magnétiquement entre eux.

FIG. 1

# DISPOSITIF MOTEUR POUR L'ALIMENTATION DE VEHICULES ET ENGINS INDUSTRIELS

La présente invention se rapporte au domaine de l'entraînement électrique de véhicules et engins industriels par des moteurs électriques à induction.

Les moteurs électriques utilisés pour la traction électrique et pour l'entraînement d'engins industriels sont habituellement alimentés sous une tension électrique relativement élevée, une valeur typique étant de 3000 volts, produite à partir d'une tension continue au moyen d'un onduleur de tension. Dans ces applications, les onduleurs de tension utilisés comprennent des semi-conducteurs connectés en série directe. Cela entraîne le déclassement en tension des semi-conducteurs et un alourdissement des circuits de protection qui doivent utiliser des condensateurs plus gros avec une plus grande dissipation de puissance. Ces inconvénients s'avèrent particulièrement gênants lorsqu'il est fait usage de thyristors à blocage par la gâchette ayant un temps de stockage et une dispersion importants et pour lesquels les retards à l'amorçage et à l'extinction varient de façon sensible d'un composant à l'autre.

On connaît des moteurs électriques à induction comportant des enroulements inducteurs divisés en plusieurs groupes alimentés en courant régulé à partir de sources de tension distinctes. De tels moteurs à plusieurs groupes d'enroulements inducteurs n'ont cependant encore jamais été combinés à plusieurs convertisseurs de tension à thyristors à blocage par la gâ chette travaillant en tension régulée à partir d'une source de tension continue unique et pouvant avoir plusieurs niveaux de tension distincts (par exemple V et 2V)

La présente invention vise à réaliser l'utilisation optimale de ces convertisseurs de tension utilisant des thyristors à blocage par la gâchette de manière à permettre d'associer autant de convertisseurs de tension en série qu'il est nécessaire pour supporter la tension d'alimentation sans autre déclassement et sans autre complication que celle de devoir disposer d'un moteur électrique ayant autant d'enroulements inducteurs qu'il existe de convertisseurs de tension.

L'invention résout ce problème grâce à un dispositif moteur comprenant au moins un moteur électrique à induction à courant alternatif ayant plusieurs pôles et plusieurs groupes d'enroulements inducteurs par phase et caractérisé en ce que chaque moteur à induction comprend un nombre de groupes d'enroulements inducteurs qui est un sous-multiple du nombre de pôles du moteur, et en ce que chaque groupe d'enroulements inducteurs est connecté à la sortie d'un convertisseur de tension distinct pour convertir une tension électrique alternative, les convertisseurs de tension étant connectés en série aux bornes d'une source de tension électrique continue, un condensateur étant connecté en parallèle avec chaque convertisseur de tension.

Les enroulements inducteurs de chaque moteur à induction sont répartis de façon aussi symétrique que possible autour du rotor. Dans un mode de répartition exemplaire, les enroulements inducteurs du moteur électrique à induction sont répartis de façon symétrique dans les encoches du stator, chaque encoche contenant plusieurs enroulements inducteurs, chaque enroulement appartenant à un groupe d'enroulements inducteurs distinct.

Dans un autre mode de répartition exemplaire, chaque encoche du stator contient un enroulement et les enroulements appartenant à un même groupe d'enroulements inducteurs occupent les encoches successives de deux secteurs polaires non consécutifs; en l'occurrence, les enroulements des deux groupes d'un moteur quadripolaire occupent des groupes alternés de douze encoches consécutives.

Une variante d'exécution du dispositif moteur selon l'invention vise à rendre ce dispositif utilisable avec un réseau multitension sans surdimensionnement ni déclassement des convertisseurs de tension ou des moteurs à induction et sans dégradation des performances. Cette variante d'exécution se caractérise en ce que les convertisseurs de tension sont connectés en série par l'intemédiaire d'un premier circuit de connexion comprenant un moyen de commutation, en ce que la première extrémité dudit premier circuit de connexion est reliée à une borne de la source de tension continue par l'intermédiaire' d'un deuxième circuit de connexion comprenant un moyen de commutation, en ce que la deuxième extrémité dudit premier circuit de connexion est reliée à la seconde borne de la source de tension continue par l'intermédiaire d'un troisième circuit de connexion comprenant un moyen de commutation, les deuxième et troisième circuits de connexion étant interrompus par leurs moyens de commutation lorsque le premier circuit de connexion se trouve éta bli par son moyen de commutation de manière que les convertisseurs de tension se trouvent connectés en série aux bornes de la source de tension continue, lesdits deuxième et troisième circuits de connexion étant établis par leurs moyens de commutation lorsque le premier circuit de connexion se trouve interrompu par son moyen de commutation de manière que les convertisseurs de tension se trouvent chacun connectés aux bornes de la source de tension continue.

L'invention est exposée dans ce qui suit à l'aide des dessins ci-annexés dans lesquels :
- la figure 1 est un schéma simplifié du circuit électrique d'un mode de réalisation exemplaire du dispositif selon l'invention,
- la figure 2 illustre schématiquement un premier mode de répartition exemplaire des enroulements inducteurs dans le moteur à induction de la figure 1,
- la figure 3 illustre schématiquement un deuxième mode de répartition exemplaire des enroulements inducteurs dans le moteur à induction de la figure 1,
- les figures 4 et 5 sont des schémas simplifiés de deux modes d'exécution d'une variante de réalisation du dispositif de la figure 1.
- les figures 6 et 7 illustrent deux autres modes d'exécution exemplaires de la variante de réalisation des figures 4 et 5.

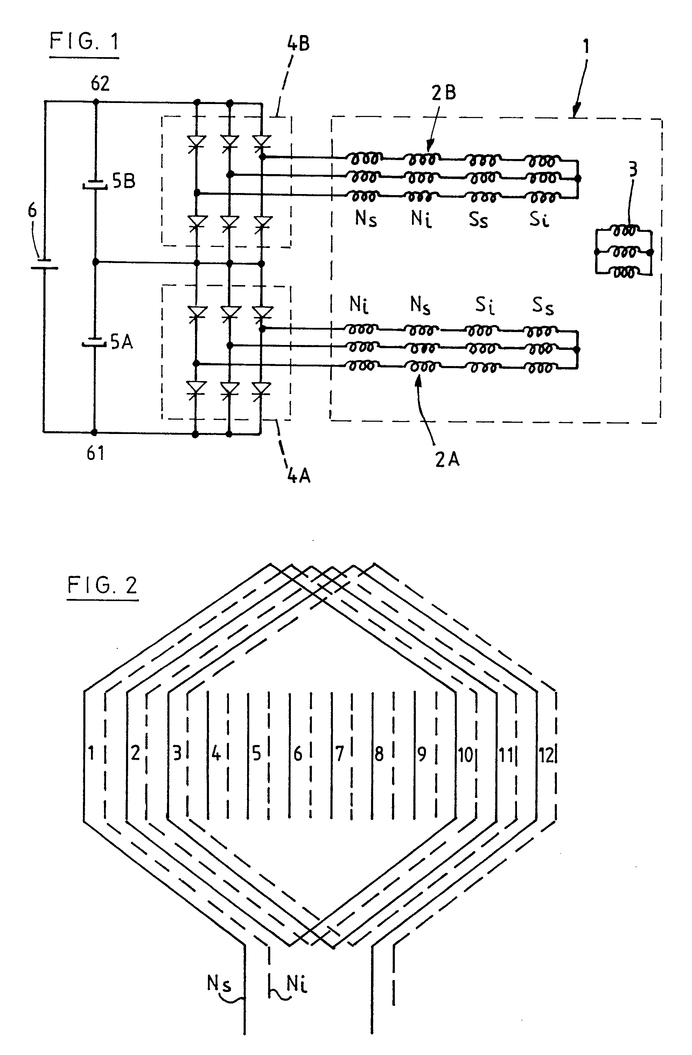

Dans le montage illustré à la figure 1, la référence numérique 1 désigne un moteur électrique triphasé quadripolaire représenté de façon conventionnelle par ses enroulements de stator et de rotor. Le stator comporte deux groupes d'enroulements inducteurs 2A et 2B, le rotor comporte un enroulement induit 3. Chaque groupe d'enroulements inducteurs est connecté à la sortie d'un convertisseur de tension à semi-conducteurs distinct : le groupe 2A est oonnecté au convertisseur 4A, le groupe 2B est connecté au convertisseur 4B. Les convertisseurs de tension sont des dispositifs connus en soi qui servent à convertir une tension électrique continue en tension électrique alternative.

Les convertisseurs de tension 4A et 4B sont connectés en série aux bornes d'une source de tension continue 6 et en parallèle sur chaque convertisseur de tension est connecté un condensateur électrique : le condensateur 5A sur le convertisseur 4A et le condensateur 5B sur le convertisseur 4B. Grâce à ce montage, les semi-conducteurs des convertisseurs de tension se trouvent soumis à une fraction seulement, en l'occurrence la moitié de la tension de la source d'alimentation 6. Le nombre de groupes d'enroulements inducteurs est un sous-multiple du nombre de pôles du moteur, en l'occurrence deux groupes d'enroulements pour un moteur quadripolaire. Il sera évident pour l'homme de l'art que le nombre de groupes d'enroulements inducteurs et le nombre de pôles du moteur peuvent être différents de deux et quatre.

Les différents groupes d'enroulements inducteurs sont isolés électriquement l'un de l'autre et sont couplés magnétiquement entre eux. Les enroulements des différents groupes d'enroulements inducteurs sont répartis de façon aussi symétrique que possible autour du rotor. La figure 2 illustre un mode de répartition des enroulements inducteurs dans les encoches du stator. Le dessin représente douze des encoches numérotées de 1 à 12. Dans chaque encoche sont logés deux enroulements superposés, un enroulement appartenant chacun à un groupe d'enroulements inducteurs distinct. L'encoche 1, par exemple, contient un enroulement supérieur $N_s$ appartenant au groupe 2A et un enroulement inférieur $N_i$ appartenant au groupe 2B. Les enroulements appartenant à un même groupe d'enroulements inducteurs sont connectés en série et occupent des niveaux supérieur et inférieur alternés dans les secteurs polaires non consécutifs. Sur le périmètre du stator, les secteurs polaires consécutifs d'un moteur quadripolaire sont occupés successivement par exemple par les enroulements $N_i$, $N_s$, $S_i$ et $S_s$ pour le groupe d'enroulements inducteurs 2A et par les enroulements $N_s$, $N_i$, $S_s$ et $S_i$ pour le groupe 2B.

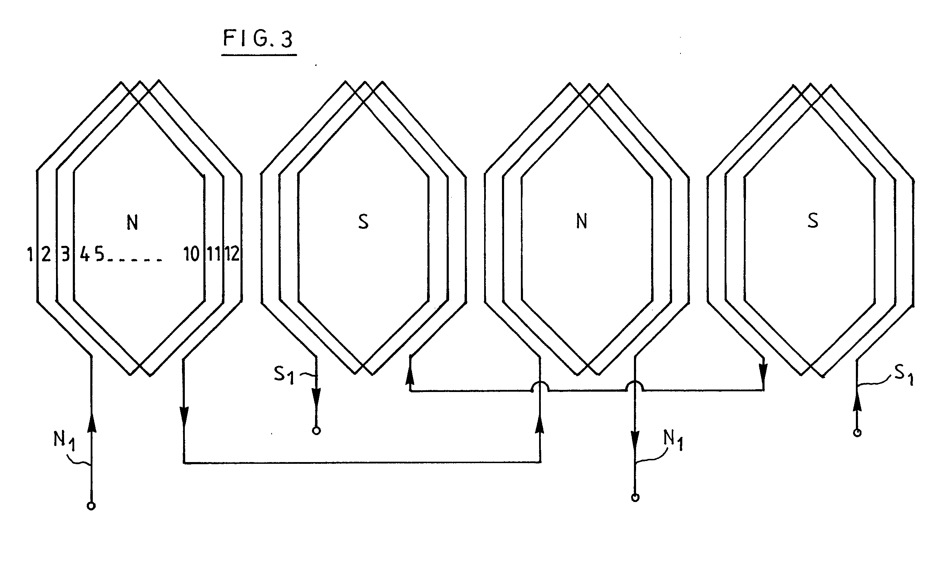

La figure 3 illustre un autre mode de répartition des enroulements inducteurs dans les encoches du stator d'un moteur quadripolaire triphasé. Ici chaque encoche contient un enroulement inducteur et les enroulements inducteurs appartenant à un même groupe $N_1$ ou $S_1$ occupent douze encoches successives notées 1, 2, ... 12 de deux secteurs polaires non consécutifs; en l'occurrence, les enroulements inducteurs du groupe $N_1$ occupent les encoches des secteurs polaires N et les enroulements du groupe $S_1$ occupent les encoches des secteurs polaires S.

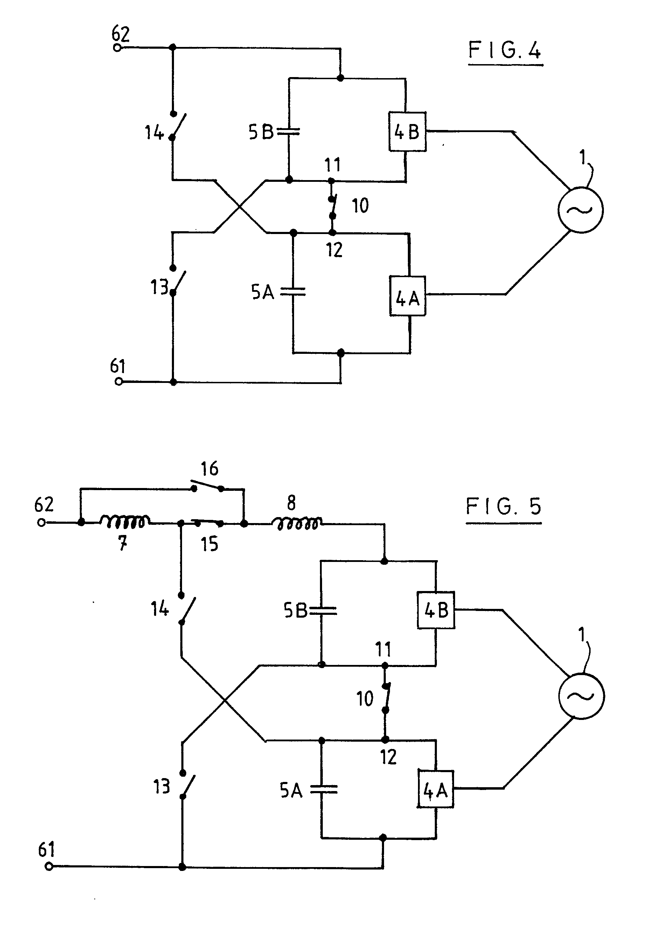

Une variante de réalisation du dispositif de la figure 1 est illustrée à la figure 4: ce mode d'exécution est adapté pour être alimenté par un réseau multitension, par exemple un réseau 3000 V / 1500 V. Les convertisseurs de tension 4A et 4B sont connectés en série par un premier circuit de connexion comprenant un moyen de commutation 10. Une extrémité 11 de ce circuit de connexion est reliée à la borne 61 de la source de tension continue 6 par un deuxième circuit de connexion comprenant un moyen de commutation 13 et l'autre extrémité 12 du premier circuit de connexion est reliée à la borne 62 de la source de tension continue 6 par un troisième circuit de connexion comprenant un moyen de commutation 14.

Le commutateur 10 se trouve dans un état de commutation inverse de l'état des commutateurs 13 et 14, ce qui, en désignant par 0 et 1 les deux états de commutation des commutateurs, se traduit par la table de vérité ci-après :

| Commutateurs | 10 | 13 | 14 |
|---|---|---|---|
| Tension 2V | 1 | 0 | 0 |
| Tension V | 0 | 1 | 1 |

De cette façon, pour une tension d'alimentation 2V, par exemple, le commutateur 10 est fermé tandis que les commutateurs 13 et 14 sont ouverts et les convertisseurs 4A et 4B se trouvent connectés en série aux bornes de la source de tension 6. Dans le cas d'une tension d'alimentation V, le commutateur 10 est ouvert et les commutateurs 13 et 14 sont fermés de sorte que chacun des convertisseurs de tension se trouve connecté aux bornes de la source d'alimentation 6.

En d'autres mots, on observe que les états de commutation des commutateurs sont organisés de manière que lorsque le premier circuit de connexion est établi, les deuxième et troisième circuits de connexion sont interrompus et lorsque le premier circuit de connexion est interrompu, les deux autres circuits de connexion se trouvent établis.

Une variante réalisant l'adaptation du circuit d'entrée au moyen des bobines de lissage 7 et 8 par exemple, est représentée à la figure 5. Dans cet exemple d'exécution, le troisième circuit de connexion se trouve connecté entre l'extrémité 12 du premier circuit de connexion 10 et une borne de la bobine de lissage 7 dont l'autre borne est reliée à la borne 62 de la source de tension. Deux autres commutateurs 15 et 16 sont connectés comme montré : le commutateur 15 se trouve dans l'état inverse de celui du commutateur 14 et le commutateur 16 se trouve dans le même état que le commutateur 14. Le montage se traduit par la table de vérité ci-après :

| Commutateurs | 10 | 13 | 14 | 15 | 16 |
|---|---|---|---|---|---|
| Tension 2V | 1 | 0 | 0 | 1 | 0 |
| Tension V | 0 | 1 | 1 | 0 | 1 |

Cette table de vérité montre que le fonctionnement du montage de la figure 5 est semblable à celui du montage de la figure 4 : les deux convertisseurs de tension 4A et 4B sont connectés en série pour une tension 2V et ils sont connectés chacun aux bornes de la source d'alimentation dans le cas d'une tension V.

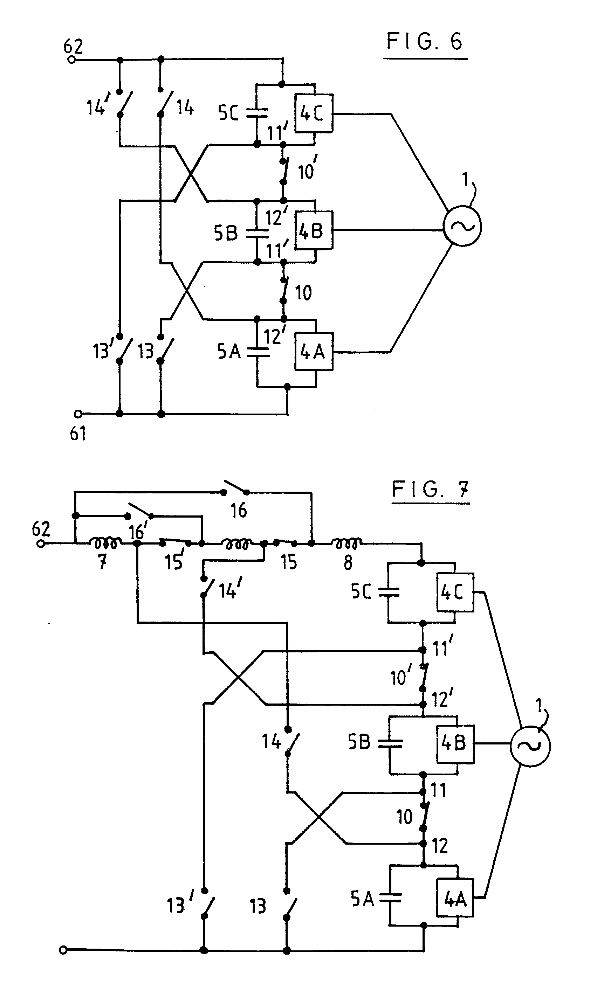

Les figures 6 et 7 illustrent des montages similaires avec trois convertisseurs de tension 4A, 4B et 4C, respectivement sans bobine de lissage et avec bobines de lissage. L'état du montage de la figure 6 pour des tensions V et V/3 peut être représenté par la table de vérité ci-après :

| Commutateurs | 10 | 10' | 13 | 13' | 14 | 14' |
|---|---|---|---|---|---|---|
| Tension V | 1 | 1 | 0 | 0 | 0 | 0 |
| Tension V/3 | 0 | 0 | 1 | 1 | 1 | 1 |

L'état du montage de la figure 7 pour des tensions V et V/3 peut être représenté par la table de vérité suivante :

| Commutateurs | 10 | 10' | 13 | 13' | 14 | 14' | 15 | 15' | 16 | 16' |
|---|---|---|---|---|---|---|---|---|---|---|
| Tension V | 1 | 1 | 0 | 0 | 0 | 0 | 1 | 1 | 0 | 0 |
| Tension V/3 | 0 | 0 | 1 | 1 | 1 | 1 | 0 | 0 | 1 | 1 |

Dans le cas d'une tension V, on voit que les trois convertisseurs de tension 4A, 4B et 4C sont connectés en série aux bornes de la source de tension d'alimentation et dans le cas d'une tension V/3, chacun des convertisseurs de tension 4A, 4B et 4C se trouve connecté aux bornes de la source de tension.

Il est bien évident pour l'homme de l'art que les montages selon l'invention peuvent comprendre un nombre quelconque de convertisseurs de tension et un nombre quelconque de moteurs et que l'invention s'applique à des moteurs électriques à induction comportant un nombre quelconque de phases et un nombre quelconque de pôles. Il est clair également que l'agencement adopté pour les convertisseurs de tension à thyristors utilisés dans le montage est indifférent pour ce qui concerne l'objet de l'invention.

**Revendications**

1. Dispositif moteur pour l'entraînement électrique de véhicules ou engins industriels, ce dispositif comprenant au moins un moteur électrique à induction à courant alternatif ayant plusieurs pôles et plusieurs groupes d'enroulements inducteurs par phase, caractérisé en ce que chaque moteur à induction (1) comprend un nombre de groupes d'enroulements inducteurs (2A, 2B) qui est un sous-multiple du nombre de pôles du moteur, et en ce que chaque groupe d'enroulements inducteurs (2A, 2B) est connecté à la sortie d'un convertisseur de tension distinct (4A, 4B) pour convertir une tension électrique continue en tension électrique alternative, les convertisseurs de tension étant connectés en série aux bornes d'une source de tension électrique continue (6), un condensateur (5A, 5B) étant connecté en parallèle avec chaque convertisseur de tension.

2. Dispositif selon la revendication 1, caractérisé en ce que les enroulements inducteurs (2A, 2B) de chaque moteur électrique à induction sont répartis de façon symétrique dans les encoches du stator, chaque encoche contenant plusieurs enroulements inducteurs, chaque enroulement appartenant à un groupe d'enroulements inducteurs distinct (2A, 2B).

3. Dispositif selon la revendication 1, caractérisé en ce que les enroulements appartenant à chaque groupe enroulements inducteurs sont permutés de manière régu lière sur le pourtour du stator.

4. Dispositif selon l'une quelconque des revendications précédentes, caractérisé en ce que les convertisseurs de tension sont connectés en série par l'intermédiaire d'un premier circuit de connexion comprenant un moyen de commutation (10), en ce que la première extrémité (11) dudit premier circuit de connexion est reliée à une borne de la source de tension continue (6) par l'intermédiaire d'un deuxième circuit de connexion comprenant un moyen de commutation (13), et en ce que la deuxième extrémité (12) dudit premier circuit de connexion est reliée à la seconde borne de la source de tension continue (6) par l'intermédiaire d'un troisième circuit de connexion comprenant un moyen de commutation (14), les deuxième et troisième circuits de connexion étant interrompus par leurs moyens de commutation (13, 14) lorsque le premier circuit de connexion se trouve établi par son moyen de commutation (10) de manière que les convertisseurs de tension se trouvent connectés en série aux bornes de la source de tension continue (6), lesdits deuxième et troisième circuits de connexion étant établis par leurs moyens de commutation (13, 14) lorsque le premier circuit de connexion se trouve interrompu par son moyen de commutation (10) de manière que les convertisseurs de tension se trouvent chacun connectés aux bornes de la source de tension continue (6).

5. Moteur électrique à induction destiné à être alimenté en haute tension par l'intermédiaire de plusieurs convertisseurs de tension, le moteur comprenant un rotor équipé d'enroulements d'induit et un stator équipé de plusieurs groupes d'enroulements inducteurs isolés électriquement l'un de l'autre et couplés magnétiquement entre eux, chaque groupe d'enroulements inducteurs étant prévu pour être connecté à un convertisseur de tension distinct (4A, 4B), caractérisé en ce que le nombre de groupes d'enroulements inducteurs (2A, 2B) est un sous-multiple du nombre de pôles du moteur.

6. Moteur électrique selon la revendication 5, caractérisé en ce que les enroulements inducteurs (2A, 2B) du moteur électrique à induction sont répartis de façon symétrique dans les encoches du stator, chaque encoche contenant plusieurs enroulements inducteurs ($N_i$ $N_s$, $S_i$ $S_s$), chaque enroulement appartenant à un groupe d'enroulements inducteurs distinct (2A, 2B).

7. Moteur électrique selon la revendication 5 ou 6, caractérisé en ce que les enroulements appartenant à chaque groupe d'enroulements inducteurs sont permutés de manière régulière sur le pourtour du stator.

EP 0 320 560 A1

FIG. 1

FIG. 2

FIG. 3

EP 0 320 560 A1

FIG. 4

FIG. 5

FIG. 6

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | PATENT ABSTRACTS OF JAPAN, vol. 6, no. 45 (M-118)[923], 20 mars 1982; & JP - A - 56 159 903 (TOKYO SHIBAURA DENKI K.K.) 09-12-1981 <br> --- | 1,5 | B 60 L 9/22 <br> H 02 P 7/63 |
| Y | US-A-4 160 938 (M. AKAMATSU) <br> * colonne 1, ligne 9 - colonne 2, ligne 68; figures 1a,1b * <br> --- | 1,5 | |
| A | DE-B-2 745 824 (DEMAG AG) <br> * colonne 3, lignes 35-57; figure 2 * <br> --- | 1,5 | |
| A | DE-B-2 348 157 (SIEMENS AG) <br> * colonne 8, lignes 25-46 * <br> --- | 1 | |
| A | DE-A-1 942 778 (SIEMENS AG) <br> * pagina 2, alinéa 2 - pagina 3, alinéa 1 * <br> ----- | 1 | |

DOMAINES TECHNIQUES RECHERCHES (Int. Cl.4)

B 60 L 9/00
H 02 P 5/00
H 02 P 7/00

Le présent rapport a été établi pour toutes les revendications

| Lieu de la recherche | Date d'achèvement de la recherche | Examinateur |
|---|---|---|
| BERLIN | 25-08-1988 | GESSNER E A F |

EPO FORM 1503 03.82 (P0402)